# EUROPÄISCHE PATENTANMELDUNG

(11) **EP 3 741 483 A1**
(43) Veröffentlichungstag der Anmeldung: **25.11.2020**
(21) Anmeldenummer: 20000026.3
(22) Anmeldetag: 17.01.2020
(51) Int. Cl.: B23B 27/16, B23B 29/04

(54) **WENDESCHNEIDPLATTE, SCHNEIDPLATTENHALTER UND SCHNEIDVORRICHTUNG**

(30) Priorität: 18.01.2019 DE 102019101271; 24.10.2019 DE 102019128697
(71) Anmelder: Diametal A.G., 2504 Biel/Bienne (CH)
(72) Erfinder: Akbari, Mansur, 2504 Biel/Bienne (CH); Paganopoulos, Anthony, 2504 Biel/Bienne (CH)
(74) Vertreter: Laminger, Norbert

(57) **Zusammenfassung**

Die Erfindung betrifft eine Wendeschneidplatte (1) für ein Zerspanungswerkzeug für Materialbearbeitungsmaschinen, mit einer ersten Symmetrieachse (A), mit zumindest einer die Wendeschneidplatte (1) parallel oder koaxial zur ersten Symmetrieachse (A) durchsetzenden Befestigungsöffnung (16), wobei sich zwei Gruppen von Hauptschneiden (13.1 bis 13.6), Nebenschneiden (14.1 bis 14.6) und Schneidecken (2 bis 5, 7, 8) bzgl. einer zweiten Symmetrieachse (B) drehsymmetrisch gegenüberliegen. Zumindest die Hauptschneiden (13.1 bis 13.6) schließen mit einer orthogonal zur ersten Symmetrieachse (A) orientierten Ebene (E), einen spitzen Schneidenwinkel (γ) ein.

Die Erfindung betrifft weiters einen Schneidplattenhalter (17) zur Aufnahme und Fixierung einer Wendeschneidplatte (1). An einem länglichen Grundkörper (37) mit Polygon-Querschnitt ist eine Ausnehmung (9) zur Aufnahme der Wendeschneidplatte (1) vorhanden. Eine Auflagefläche (38) zur Abstützung der Wendeschneidplatte (1) ist um die Längsachse (L) des Grundkörpers (37) verdreht und um eine zweite Achse, eine Schnittgerade zwischen der verdrehten Auflagefläche (38) und einer Ebene senkrecht auf die Längsachse (L), gekippt.

## Beschreibung

Die Erfindung betrifft eine Wendeschneidplatte für ein Drehwerkzeug für Materialbearbeitungsmaschinen, insbesondere Metallbearbeitungsmaschinen, gemäss dem Oberbegriff des Anspruchs 1, sowie einen Schneidplattenhalter für dieses Werkzeug, zur Aufnahme und Fixierung einer Wendeschneidplatte, gemäss dem Oberbegriff des Anspruchs 9, sowie ein Drehwerkzeug für Materialbearbeitungsmaschinen, insbesondere Metallbearbeitungsmaschinen.

Derartige Schneidvorrichtungen sind bereits in vielfältiger Form und Ausgestaltung bekannt und gebräuchlich. So wird beispielsweise in der DE 20 2010 009 471 U1 ein Schneidwerkzeug offenbart, welches über zwei keilförmig ausgeformte und zueinander verschiebbare Halterteile gehalten und eingestellt wird.

Auch doppelseitig verwendbare Wendeschneidplatten sind bekannt, beispielsweise aus der EP 2 422 905 A2. Diese Wendeschneidplatte ist besonders zur effektiven Beseitigung der Späne ausgelegt und weist u.a. eine allenfalls aus Teilkanten zusammengesetzte Hauptschneide auf, die von einer parallel zur Mittelebene der Platte verlaufenden Nasenkante unter einem Neigungswinkel von 3 bis 10 Grad abfällt, wobei die Hauptschneide überdies aus zum Teil konkaven Teilschneiden zusammengesetzt ist.

Aufgabe der vorliegenden Erfindung war es, die Nachteile des Standes der Technik zu überwinden und eine möglichst vielseitig und auch lange nutzbare Wendeschneidplatte sowie einen Schneidplattenhalter zur Verfügung zu stellen, der zusammen mit der Wendeschneidplatte für eine möglichst lange Betriebsdauer eine beliebige gewünschte Schneidgeometrie erzielen lässt.

Diese Aufgabe wird durch eine Vorrichtung gemäß den Ansprüchen gelöst.

Ausgangspunkt ist dabei eine Wendeschneidplatte mit einer ersten Symmetrieachse, wobei zumindest eine erste Gruppe von Hauptschneiden in Bezug auf die erste Symmetrieachse n-zählig rotationssymmetrisch angeordnet sind, mit n vorzugsweise grösser oder gleich 2, wobei diese Hauptschneiden mit den jeweils angrenzenden ersten Nebenschneiden in jeweils einer Schneidecke einer ersten Gruppe von Schneidecken unter einem Eckenwinkel von maximal 90 Grad zusammenlaufen. Es ist weiters eine die Wendeschneidplatte parallel oder koaxial zur ersten Symmetrieachse durchsetzenden Befestigungsöffnung vorgesehen. Die Wendeschneidplatte ist weiters um eine auf in ihrer Mittelebene liegende und zur ersten Symmetrieachse orthogonale zweite Symmetrieachse um 180 Grad drehsymmetrisch aufgebaut und weist eine zweite Gruppe von Hauptschneiden, Nebenschneiden und Schneidecken auf, welche der erste Gruppe von Hauptschneiden, Nebenschneiden und Schneidecken um die zweite Symmetrieachse drehsymmetrisch gegenüberliegt.

Eine derartige Schneidplatte ist erfindungsgemäss dadurch gekennzeichnet, dass zumindest die Hauptschneiden mit einer orthogonal zur ersten Symmetrieachse orientierten Ebene, welche die zugehörigen Schneidecken beinhaltet, einen spitzen Winkel einschliessen. Damit kann die jeweilige Hauptschneide über ihre gesamte Länge die gewünschte Schneidgeometrie erfüllen, wobei durch die für jede Umrissform der Wendeschneidplatte maximal mögliche Anzahl von Hauptschneiden eine lange Funktionsdauer der Wendeschneidplatte mit der gewünschten Schneidgeometrie erhalten werden.

Bevorzugt liegt der Winkel zwischen 0,5 und 30 Grad, wodurch die Wendeschneidplatte mit einem geeigneten Schneidplattenhalter in herkömmlichen Materialbearbeitungsmaschinen verwendet werden kann.

Gemäss einer vorteilhaften Ausführungsform der Erfindung sind die einander drehsymmetrisch gegenüberliegenden Schneidecken durch eine symmetrisch verlaufende Frontkante verbunden. Damit lassen sich mit einem geeigneten Schneidplattenhalter beliebige Geometrien an den Hauptschneiden und den zugehörigen Schneidecken realisieren, welche wieder aufgrund der maximal möglichen Anzahl von Hauptschneiden möglichst lange erhalten werden.

Eine besonders wirtschaftlich herstellbare und auch mechanisch stabile Variante sieht die Verbindung der Schneidecken durch eine gerade Frontkante vor, die bevorzugt auch einen Winkel von 0 Grad mit der ersten Symmetrieachse einschliesst.

Bevorzugt ist vorgesehen, dass die Hauptschneiden in jeweils eine anschliessende Seitenkante übergehen, welche Seitenkanten parallel zur Ebene verlaufen und über eine Ecke mit stumpfem Winkel oder ein bogenförmiges Verbindungsstück zur anschliessenden Nebenschneide verlaufen.

Gemäss einer weiteren erfindungsgemässen Ausführungsform der Wendeschneidplatte sind zumindest die Hauptschneiden mit den spiegelsymmetrisch gegenüberliegenden Nebenschneiden durch eine Freifläche verbunden, die zumindest in den an die Hauptschneiden anschliessenden Randbereichen mit einer orthogonal zur ersten Symmetrieachse orientierten Ebene, welche die zugehörigen Hauptschneiden beinhaltet, einen inneren Winkel zwischen 90 und 60 Grad einschliesst, wobei eine bevorzugte Variante diesen Winkel bei 90 Grad hat.

Vorteilhafterweise ist eine Wendeschneidplatte gemäss der Erfindung weiters dadurch gekennzeichnet, dass die einander um die zweite Symmetrieachse drehsymmetrisch gegenüberliegenden Gruppen von Hauptschneiden, Nebenschneiden und Schneidecken und Ecken durch parallel zur ersten Symmetrieachse orientierte Kanten bzw. Flächen miteinander verbunden sind.

Bevorzugt sind geometrische Gestaltungen einer erfindungsgemässen Wendeschneidplatte mit einer Symmetrie mit der Zähligkeit n gleich 2 oder 3 und somit jeweils 4 oder 6 Hauptschneiden, Nebenschneiden und Schneidecken. Damit ergibt sich vorzugsweise in der Draufsicht parallel zur ersten Symmetrieachse ein als rautenförmiger oder als dreistrahliger Stern vorliegender Umriss der Wendeschneidplatte. Dies hat sich als beste Kombination von mechanischer Stabilität, Flexibilität zur Einstellung der gewünschten Schneidgeometrie und möglichst hoher Anzahl von Hauptschneiden für lange Funktionsdauer einer einzelnen Wendeschneidplatte herausgestellt.

Für optimale Ergebnisse betreffend die Materialbearbeitung kann als zusätzliches erfindungsgemässes Merkmal vorgesehen sein, dass der sich an die Hauptschneiden anschliessende Randbereich der Spanfläche eine konkave Ausnehmung ausbildet, unter Ausbildung von inneren Keilwinkeln kleiner 90 Grad. Bevorzugt ist eine vorteilhafte Ausführungsform zusätzlich mit zumindest einem daran anschliessenden Spanbrecher versehen.

Bevorzugt ist zur einfachen Orientierung des Benutzers beim Rüsten mit einer neuen Hauptschneide jede einem bestimmten Hauptschneide-Nebenschneide-Paar zugehörige Spanfläche mit einer Markierung versehen, welche sich von allen anderen Markierungen anderer Spanflächen unterscheidet.

Zur Lösung der anfangs gestellten Aufgabe ist auch ein Schneidplattenhalter Teil der vorliegenden Erfindung, der als Bestandteil eines Drehwerkzeugs für Materialbearbeitungsmaschinen, insbesondere Metallbearbeitungsmaschinen, zur Anwendung kommt. Er dient zur Aufnahme und Fixierung einer Wendeschneidplatte, insbesondere einer Wendeschneidplatte gemäss einem der vorhergehenden Absätze, und verfügt über einen Grundkörper mit einer Längsachse und eine Ausnehmung zur Aufnahme der Wendeschneidplatte sowie eine Struktur zur lösbaren Verbindung mit einem Befestigungsmittel für die Wendeschneidplatte. Für längliche Grundkörper fällt die Längsachse typischerweise mit deren Längsmittelachse und der Richtung der Zustellung zum Werkstück zusammen. Für anders ausgebildete Grundkörper ist für die Erläuterung der gegenständlichen Erfindung allein die Richtung der Zustellung des Werkzeuges zum Werkstück als Längsachse definiert. Die Ausnehmung weist zumindest eine Auflagefläche zur Abstützung der Wendeschneidplatte auf. Vorzugsweise dient die Auflagefläche zur Abstützung der Wendeschneidplatte in einer Richtung radial zur Längsachse des Grundkörpers. Besonders bevorzugt sind auch Seitenwände zur Abstützung der Wendeschneidplatte parallel zur Längsachse des Grundkörpers und/oder in Umfangsrichtung vorgesehen.

Zur Lösung der gestellten Aufgabe ist ein derartiger Schneidplattenhalter dadurch gekennzeichnet, dass die Auflagefläche um die Längsachse des Grundkörpers verdreht und um eine zweite Achse, die eine Schnittgerade zwischen der verdrehten Auflagefläche und einer Ebene senkrecht auf die Längsachse des Grundkörpers ist, gekippt ist, wobei die geringste Dicke des Grundkörpers unterhalb der Auflagefläche am äussersten Ende des Grundkörpers vorliegt. Durch diese Ausführungsform des Schneidplattenhalters wird auch die Wendeschneidplatte entsprechend gekippt positioniert und dem Werkstück zugestellt, was zum einen eine mit dieser Schneidplatte sonst nicht mögliche Schneidgeometrie ermöglich. Mit einer Wendeschneidplatte wie in den vorigen Absätzen beschrieben lassen sich mit einer derartigen Schneidplattenhalter-Wendeschneidplatten-Anordnung bestimmte Schneidgeometrien für alle vorhandenen Hauptschneiden in gleicher, exakt reproduzierbarer Weise herstellen und somit eine lange Funktionsdauer mit nur einer Wendeschneidplatte realisieren.

Insbesondere können durch die Kombination dieses Schneidplattenhalters mit der zuvor beschriebenen Wendeschneidplatte können für den Bearbeitungsprozess in der Bearbeitungszone dieselben geometrischen Merkmale sichergestellt werden wie für Standard-Werkzeuge, beispielsweise gemäss DIN ISO 1832:2012. Wenn beispielsweise ein Freiwinkel von 7 Grad gegeben sein soll, dann kann dies bei herkömmlichen Schneidplatten nur an einer Seite erzielt werden. Wenn hingegen gemäss der vorliegenden Erfindung eine Wendeschneidplatte mit einem nominalen Freiwinkel von 0 Grad auf den Schneidplattenhalter mit seiner zweifach gekippten Auflagefläche montiert wird, kann wiederum ein Freiwinkel von 7 Grad erhalten werden. Durch den nominalen Freiwinkel von 0 Grad der Wendeschneidplatte kann diese aber mehrfach symmetrisch angefertigt sein, so dass nach Abnützung einer Schneide die Platte einfach gedreht oder gekippt werden und mit den gleichen geometrischen Verhältnissen weiter verwendet werden kann. Die Abstimmung der Winkel an der Wendeschneidplatte und der Winkel, um welche die Auflagefläche am Schneidplattenhalter geneigt sind, lässt für mehrfach symmetrische Wendeschneidplatten die herkömmlich gebräuchlichen geometrischen Verhältnisse, insbesondere die herkömmlich verwendeten Freiwinkel, einstellen.

Gemäss einer vorteilhaften Ausführungsform der Erfindung ist weiters vorgesehen, dass die Auflagefläche in jeder Ebene orthogonal auf die Längsachse des Grundkörpers mit einer Ebene senkrecht auf die Arbeitsebene des Werkzeuges - welche aufgespannt ist von der Vorschubrichtung des Werkzeuges und der Richtung der Hauptschneide - einen spitzen Winkel einschliesst, der dem gewünschten Freiwinkel entspricht.

Bevorzugt ist weiters auch eine Ausführungsform, bei welcher die Auflagefläche in jeder Ebene parallel zur Arbeitsebene des Werkzeuges mit einer Ebene parallel zur Längsachse des Grundkörpers und quer zur Arbeitsebene des Werkzeuges einen spitzen Winkel einschliesst, der dem Winkel zwischen der Längsmittelebene der einzusetzenden Schneidplatte und deren Hauptschneiden entspricht.

Gemäss einer weiteren erfindungsgemässen Ausführungsform ist der Schneidplattenhalter dadurch gekennzeichnet, dass die Auflagefläche in jeder Ebene parallel zur Längsachse des Grundkörpers und zur Arbeitsebene des Werkzeuges mit einer Ebene parallel zur Längsachse des Grundkörpers und quer zur Arbeitsebene des Werkzeuges einen spitzen Winkel einschliesst, der dem Winkel zwischen der Längsmittelebene der einzusetzenden Schneidplatte und deren Hauptschneiden plus oder minus einem gewünschten Werkzeug-Einstellwinkel entspricht.

Eine Schneidvorrichtung zur Lösung der eingangs gestellten Aufgabe umfasst typischerweise eine Wendeschneidplatte, einen stabförmigen Schneidplattenhalter mit einer Ausnehmung an einem seiner Enden zur Aufnahme der Wendeschneidplatte, sowie Befestigungsmitteln zur lösbaren Fixierung der Wendeschneidplatte in der Aufnahme des Schneidplattenhalters. Insbesondere wird eine derartige Vorrichtung als Drehwerkzeug für Materialbearbeitungsmaschinen, insbesondere Metallbearbeitungsmaschinen, eingesetzt.

Vorteilhafterweise setzt es sich zur Lösung der erfindungsgemässen Aufgabe zusammen aus einer Wendeschneidplatte wie oben beschrieben und einem Schneidplattenhalter wie in den vorhergehenden Absätzen erläutert.

Eine erfindungsgemässe Schneidvorrichtung besteht gemäss einer weiteren Ausführungsform in erster Linie aus einer Schneidplatte, welcher der Aufnahme in einem Werkzeughalter dient. Der Werkzeughalter selbst wiederum ist Teil einer Bearbeitungsmaschine. Die Schneidplatte wiederum ist das auswechselbare Werkzeug des Werkzeughalters. Regelmäßig handelt es sich bei der Schneidvorrichtung im Sinne der Erfindung um eine Zerspanungsvorrichtung. Beim Zerspanen müssen grundsätzlich ein Schneid- und ein Freiwinkel eingestellt werden. Diese Winkel werden einerseits durch einen präzisen Sitz der Schneidplatte in der Schneidaufnahme des Werkzeughalters gewährleistet, sowie durch eine präzise Geometrie des Werkzeughalters selbst und der entsprechend präzise ausgeführten Schneidplatte. Dabei bilden die Winkel applikationsabhängige Erfahrungswerte ab, wobei eine Erstoberfläche und eine Zweitoberfläche planparallel zueinander ausgeführt sind. Dabei liegt entweder die Erstoberfläche oder die Zweitoberfläche in Arbeitslage in dem Werkzeughalter und fixieren die Schneidplatte dabei im Zusammenspiel mit einer Auflagefläche bevorzugt rechtwinklig zu einer Schneidebene. Je nach Anordnung des Werkzeughalters respektive des Schneidhalters über-Kopf, schräg oder horizontal liegen die Hauptschneiden im Lot zu dem Schneidhalter. Dabei ist insbesondere wichtig, dass die Hauptschneiden, respektive Schneidwinkel, auf Höhe einer Mittellinie des rotierenden Werkstücks liegen sowie rechtwinklig zur Tangente am Berührungspunkt zu dem Werkstück, also senkrecht zum Vektor der Rotationsebene bzw. Schneidebene.

Die Schneidplatte bildet eine erste Frontkante und eine zweite Frontkante aus. Die beiden Frontkanten können identische Parameter aufweisen, sie können aber auch unterschiedliche Parameter aufweisen. Parameter bedeutet in diesem Zusammenhang beispielsweise, dass die erste Frontkante in einer ersten schrägen Ausrichtung angeordnet sein kann. Die zweite Frontkante hingegen kann hiervon abweichend schräg oder horizontal angeordnet sein. Die erste Frontkante weist jeweils endseitig eine erste Schneidecke und eine zweite Schneidecke auf. Bei den beiden Schneidecken handelt es sich um die Endpunkte der ersten Frontkante. Die zweite Frontkante weist jeweils endseitig eine dritte Schneidecke und eine vierte Schneidecke auf. Auch hier handelt es sich jeweils um die beiden Endpunkte der zweiten Frontkante.

Zwischen der ersten Schneidecke und der vierten Schneidecke ist eine Erstoberfläche vorhanden. Dabei bildet die Erstoberfläche eine flache Seite der Schneidplatte aus. Auf der anderen flachen gegenüberliegenden Seite der Schneidplatte ist eine Zweitoberfläche vorhanden. Die Schneidplatte bildet insgesamt von oben betrachtet die Form eines Parallelogramms ab.

In die Erstoberfläche ist eine Durchgangsbefestigungsbohrung eingelassen, welche durch die gesamte Erstoberfläche verläuft und im mittigen Bereich der Schneideinsatzauflagekante heraustritt. Die Durchgangsbefestigungsbohrung ist auch etwa mittig in die Erstoberfläche eingeformt. Es handelt sich hierbei um einen Durchlass, welcher ein Befestigungsmittel aufnehmen soll, um die Schneidplatte an einer entsprechenden Schneidhalterung festzulegen. Bei dem Befestigungsmittel handelt es sich beispielsweise um eine Schraube, es können aber auch andere Arten von Befestigungsmitteln vorgesehen sein, beispielsweise Klemm- oder Knebelverbindungen.

Von jeder der Schneidecken sind jeweils zwei Hauptschneiden bis hin zu einem Abschnittübergang verlaufend angeordnet. Anschliessend gehen die Hauptschneiden in Kanten über. Die Kanten verlaufen jeweils parallel zueinander und sind im Wesentlichen rechtwinklig zu einer ersten Einschubkante oder zu einer zweiten Einschubkante angeordnet. Dabei verlaufen die Kanten jeweils bis zu der ersten Einschubkante oder der zweiten Einschubkante. Weiter sind die Hauptschneiden jeweils zu den beiden Frontkanten in einem ersten identischen Winkel oder in unterschiedlichen Winkeln angeordnet.

Der Schneidhalter weist eine Aufnahme auf, in welche die Schneidplatte teilweise herausstehend einbringbar ist. Diese Aufnahme wiederum weist eine Schneidhalterauflage auf, wobei die Schneidhalterauflage derart schräg zu einem Untergrund angeordnet ist, dass der erste Winkel derart abgefangen ist, sodass die Hauptschneiden horizontal oder parallel zu einem Untergrund anordenbar sind.

Die horizontale Ausrichtung der Schneidschrägkanten ist hierbei wichtig, insbesondere ein exakter Winkel zum Schneidhalter, da ansonsten der Winkel während der Schneidbearbeitung bzw. dem Einsatz des Werkzeugs auf der Bearbeitungsmaschine nicht stimmt. Aufgrund der fertigungstechnischen Gegebenheiten bei der Herstellung einer solchen Schneidplatte, wenn bis zu acht solcher Hauptschneiden auf einer Schneidplatte unterzubringen sind, mussten die Hauptschneiden jedoch geneigt werden. Um diese Neigung auszugleichen, also die Schneidplatte in Relation zum bearbeitenden Werkstück wieder in die Horizontale zu bringen, muss der Schneidhalter bzw. die darin ausgearbeitet Aufnahme für die Schneidplatte entsprechend ebenfalls geneigt ausgeführt werden.

Die Schräge der Schneidhalterauflage kann dabei auch derart gemeint sein, dass die Hauptschneiden im Lot beziehungsweise im Wasser sind. Dies insbesondere zu einem Untergrund der Bearbeitungsmaschine.

Dabei kann die erste Frontkante von der ersten Schneidecke zu der zweiten Schneidecke in einem zweiten Winkel schräg angeordnet sein. Wohingegen die zweite Frontkante von der vierten Schneidecke zu der dritten Schneidecke in einem weiteren Winkel schräg angeordnet sein kann. Ausserdem bildet sich zwischen der ersten Schneidecke und einerseits der Durchgangsbefestigungsbohrung eine erste Funktionsseite aus und zwischen der vierten Schneidecke und andererseits der Durchgangsbefestigungsbohrung einer zweiten Funktionsseite. Die Funktionsseiten können hierbei jeweils für verschiedene Funktionalitäten eingesetzt werden. Gleiches gilt auch für die vierte Funktionsseite, welche sich zwischen der zweiten Schneidecke und der Durchgangsbefestigungsbohrung ausbildet und zwischen der dritten Schneidecke und der Durchgangsbefestigungsbohrung, wo sich eine dritte Funktionsseite ausbildet. Ferner weist die Erstoberfläche oder die Schneideinsatzauflagekante jeweils eine erste optische Markierung und eine zweite optische Markierung auf. Die optischen Markierungen sollen dazu dienen, dass der Nutzer weiss, welche Seite beziehungsweise welche Hauptschneide bereits genutzt wurde und welche noch unbenutzt ist.

Weiter kann der Nutzer die Schneidplatte derart in den Schneidhalter einbringen, dass entweder die Erstoberfläche oder die Zweitoberfläche auf der Schneidhalterauflage zum Liegen kommt. Dabei kann der Nutzer durch die Art des Einbringens in den Schneidhalter auch bestimmen, welche der Schneidecken von der Schneidhalterauflage wegragend aus dem Schneidhalter herausstehen soll und welche der Hauptschneide dabei zum Einsatz kommen soll. Dies führt zu einer mehrfachen Nutzbarkeit der Schneidplatte.

Weiter ist zwischen den jeweils zwei Hauptschneiden jeder der Schneidecken ein Spanbrecher angeordnet. Dies dient der besseren Funktionsfähigkeit der Gesamtkonstruktion. Gleiches gilt für eine glatte Freifläche, welche zwischen den beiden Frontkanten und den beiden Einschubkanten ausgebildet sind.

Zum besseren Verständnis der Erfindung wird diese anhand der nachfolgenden Figuren näher erläutert.

Es zeigen jeweils in stark vereinfachter, schematischer Darstellung:
- Fig. 1: Eine Wendeschneidplatte gemäss der Erfindung mit 2-zähliger Rotationssymmetrie und rautenförmigem Umriss,
- Fig. 2: Das dem Werkstück zugewandte Ende eines Drehwerkzeugs unter Einsatz der Wendeschneidplatte der Fig. 1 in einem erfindungsgemässen Schneidplattenhalter in der Seitenansicht,
- Fig. 3: Das Drehwerkzeug der Fig. 2 in der Vorderansicht,
- Fig. 4: Eine Ansicht von schräg oben auf das Vorderende des Drehwerkzeugs der Fig. 2,
- Fig. 5: Eine Ansicht entsprechend Fig. 4 auf ein Drehwerkzeug mit einer Wendeschneidplatte gemäss einer weiteren erfindungsgemässen Ausführungsform,
- Fig. 6: Eine Vorderansicht des Drehwerkzeuges der Fig. 2 mit einem Querschnitt durch die Wendeschneidplatte knapp hinter der vorderen Schneidecke,
- Fig. 7: Eine Seitenansicht einer Hälfte einer Wendeschneidplatte gemäss einer weiteren erfindungsgemässen Ausführungsform,
- Fig. 8: Eine Seitenansicht einer Wendeschneidplatte entsprechend der Fig. 5,
- Fig. 9: Eine Ansicht von schräg oben auf eine weitere erfindungsgemässe Ausführungsform einer Wendeschneidplatte, mit 3-zähliger Rotationssymmetrie und sternförmigem Umriss,
- Fig. 10: Das dem Werkstück zugewandte Ende eines Drehwerkzeugs unter Einsatz der Wendeschneidplatte der Fig. 9 in einem erfindungsgemässen Schneidplattenhalter in der Seitenansicht,
- Fig. 11: Das Drehwerkzeug der Fig. 10 in der Vorderansicht,
- Fig. 12: Das vordere Ende einer beispielhaften Ausführungsform des Schneidplattenhalters entsprechend der Fig. 2 in Seitenansicht,
- Fig. 13: Das vordere Ende des Schneidplattenhalters der Fig. 12 in der Ansicht aus Richtung der Bearbeitungszone bzw. des Werkstücks, und
- Fig. 14: Einen Querschnitt durch das vordere Ende des Schneidplattenhalters der Fig. 12, ein kleines Stück hinter der Spitze.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### FIGURENBESCHREIBUNG

In der Zeichnungsfiguren sind für sich eigenständige Ausführungsformen der Erfindungsmerkmale gezeigt, wobei für gleiche Teile gleiche Bezugszeichen bzw. Bauteilbezeichnungen verwendet werden. Um unnötige Wiederholungen zu vermeiden, wird auf die detaillierte Beschreibung in den jeweils vorangegangenen Figuren hingewiesen bzw. Bezug genommen.

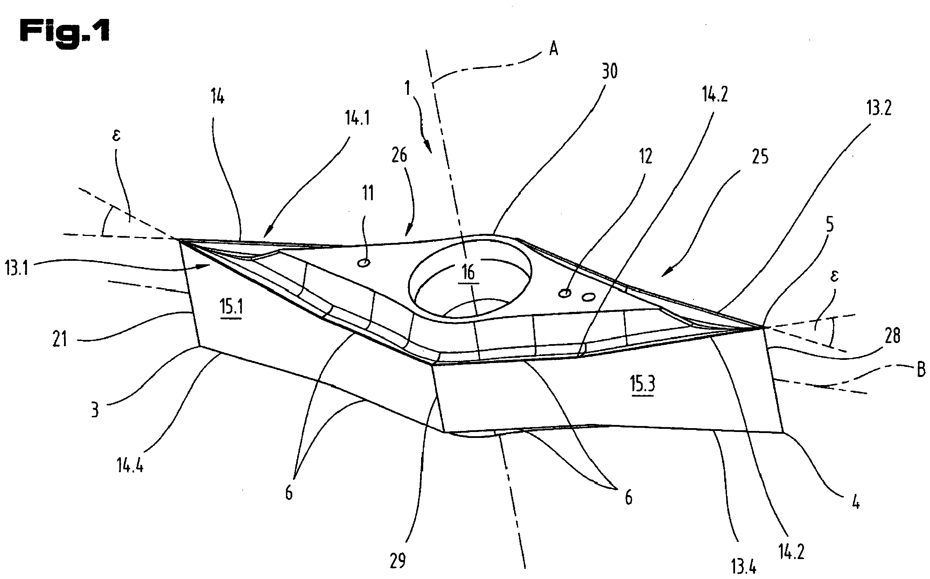

Die Fig. 1 zeigt eine erste erfindungsgemässe Ausführungsform einer Wendeschneidplatte 1 für ein Drehwerkzeug für Materialbearbeitungsmaschinen. Diese weist eine erste Symmetrieachse A auf, um welche die Wendeschneidplatte 1 ohne Vertauschen von Oberseite und Unterseite gedreht werden kann. Die Wendeschneidplatte 1 ist dabei um diese Symmetrieachse A n-zählig rotationssymmetrisch angeordnet ist. Die Zähligkeit n der Rotationssymmetrie ist dabei vorzugsweise zumindest gleich 2 oder auch grösser. Sie liegt besonders bevorzugt bei n = 2 oder n = 3. Die Zeichnungsfiguren 1 bis 8 stellen bevorzugte 2-zählig rotationssymmetrische Ausführungsformen dar, während die Zeichnungsfiguren 9 bis 12 eine bevorzugte 3-zählig rotationssymmetrische Wendeschneidplatte 1 darstellen.

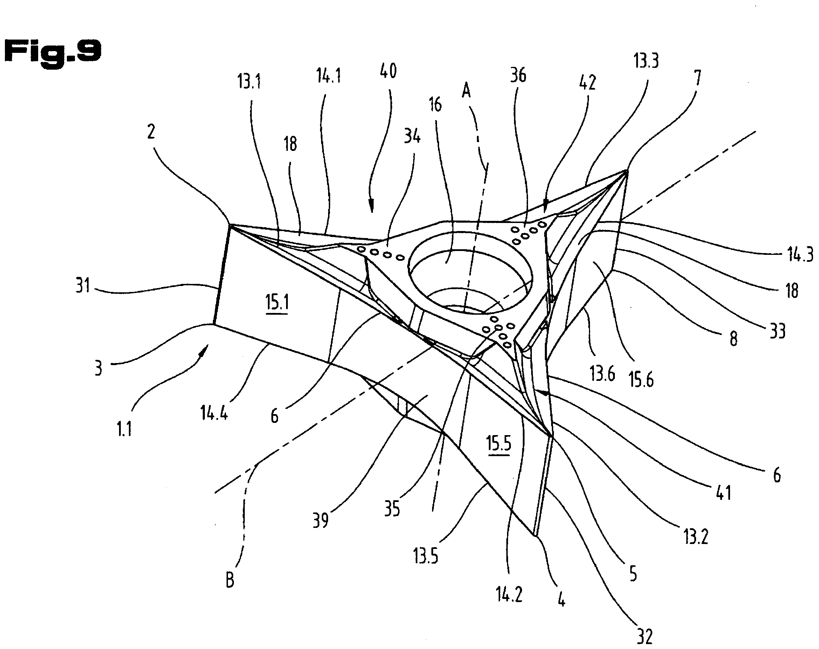

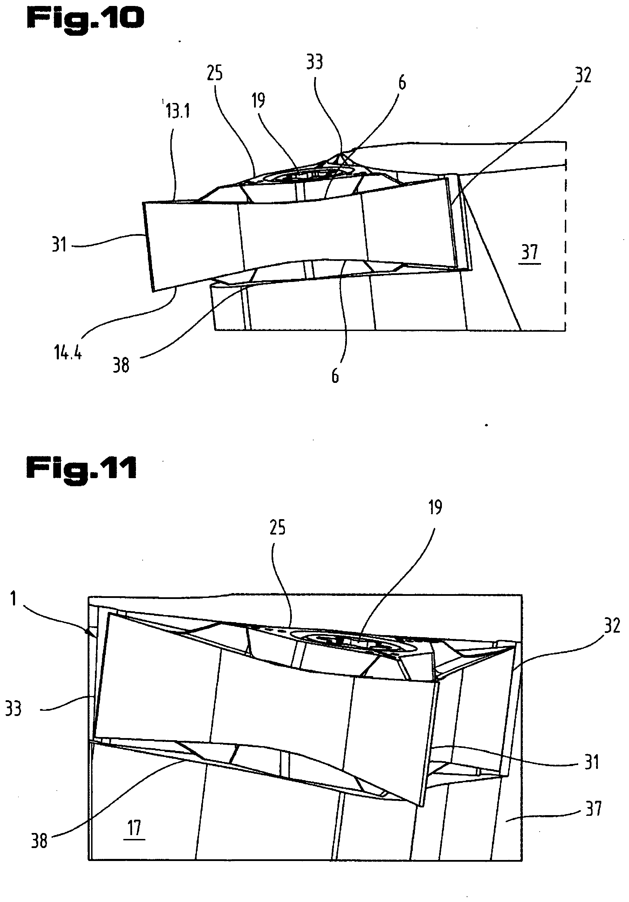

Bei allen erfindungsgemässen Ausführungsformen ist zumindest eine erste Gruppe von Hauptschneiden 13.1 bis 13.3 in Bezug auf die erste Symmetrieachse A n-zählig rotationssymmetrisch angeordnet. Diese Hauptschneiden 13.1 bis 13.3 laufen mit jeweils angrenzenden Nebenschneiden 14.1 bis 14.3 in jeweils Schneidecken 2, 5 und 7 - letzteres für die 3-zählig symmetrische Form der Fig. 9 bis 11 - einer ersten Gruppe von Schneidecken unter einem Spitzen- oder Eckenwinkel ε von maximal 90 Grad zusammen. Bevorzugt liegt der Eckenwinkel ε im Bereich zwischen 5 und 40 Grad. Hier ist anzumerken, dass die Ecken nicht nur mit einem einzigen Radius ausgeführt sein können, sondern dass auch Ausführungen mit Planschneiden, mit mehreren Radien bzw. sogenannte Wiper-Schneidplatten vorliegen können. Zur Befestigung der Wendeschneidplatte 1 ist eine parallel oder koaxial zur ersten Symmetrieachse A die Wendeschneidplatte 1 zentral durchsetzende Befestigungsbohrung 16 vorgesehen.

Zusätzlich zur oben erläuterten Rotationssymmetrie sind erfindungsgemässe Wendeschneidplatten 1 weiters um eine auf in ihrer Mittelebene liegende und zur ersten Symmetrieachse A orthogonale zweite Symmetrieachse B um 180 Grad drehsymmetrisch aufgebaut. Dies gilt für alle Zähligkeiten der Rotationssymmetrie um die erste Symmetrieachse A, wie beispielsweise aus den Fig. 1 und 9 zu ersehen ist. Auf der um diese zweite Symmetrieachse B gegenüberliegenden Seite der Wendeschneidplatte 1 ist eine zweite Gruppe von Hauptschneiden 13.4 bis 13.6, Nebenschneiden 14.4 und 14.6 sowie Schneidecken 3, 4 und 8 - letzteres wieder für die 3-zählig symmetrische Form der Fig. 9 bis 11 - vorhanden, welche der erste Gruppe von Hauptschneiden 13.1 bis 13.3, Nebenschneiden 14.1 bis 14.3 und Schneidecken 2, 5 und 7 drehsymmetrisch um die zweite Symmetrieachse B gegenüberliegen. Zur Drehsymmetrie gehört auch vorteilhafterweise, dass die beiden Deckflächen der Wendeschneidplatte 1, welche auch die Spanflächen 25, 26 sind, im Wesentlichen gleichartig ausgeführt sind, d.h. die selbe Oberflächengestaltung aufweisen und im Durchschnitt gesehen planparallel zueinander sind.

Es soll hier erwähnt werden, dass auch Wendeschneidplatten 1 ohne Rotationssymmetrie zum Einsatz kommen könnten, welche alle Schneiden auf ein und derselben Seite in Bezug auf eine Befestigungsanordnung an einem Schneidplattenhalter aufweisen. Diese Art von Schneidplatten sind dann bevorzugt lediglich um die zweite Symmetrieachse B drehsymmetrisch, vorzugsweise 2-zählig drehsymmetrisch, gestaltet.

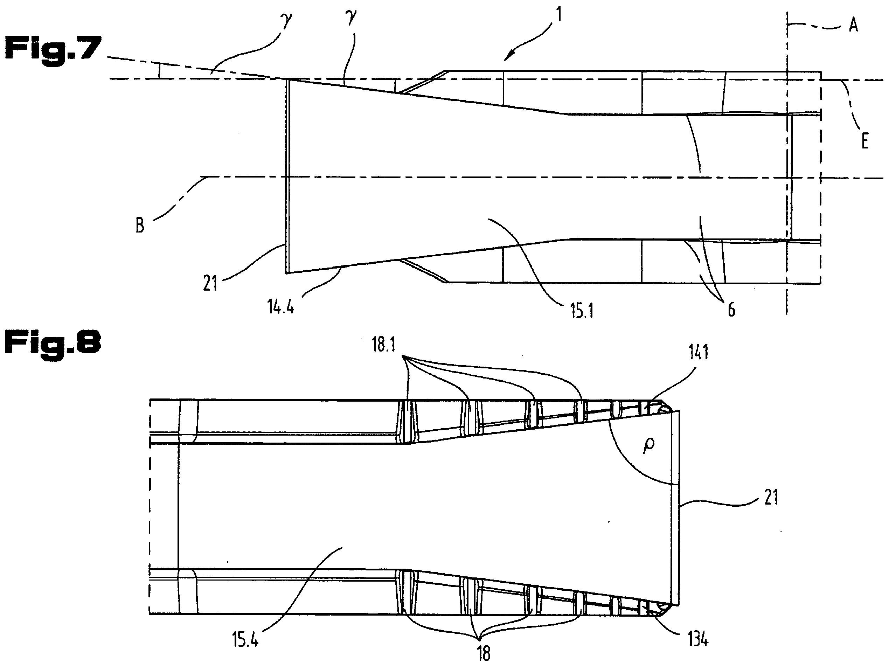

Zumindest die Hauptschneiden 13.1 bis 13.6 schliessen, wie in Fig. 7 am Beispiel der 2-zähligen Wendeschneidplatte 1 gezeigt ist, was aber für alle erfindungsgemässen Ausführungsformen von Wendeschneidplatten 1 gilt, ausgehend direkt von der jeweils zugehörigen Schneidecke 2, 5 oder 7, mit einer orthogonal zur ersten Symmetrieachse A orientierten Ebene E, welche diese Schneidecken beinhaltet, einen spitzen Schneidenwinkel γ ein. Der Schneidenwinkel γ liegt typischerweise zwischen 0,1 Grad und 70 Grad, bevorzugt zwischen 1 Grad und 30 Grad, insbesondere zwischen 2 Grad und 10 Grad. Bevorzugt gilt dies auch sinngemäss für die Nebenschneiden 14.1 bis 14.4 in allen rotationssymmetrischen Ausführungsformen der Wendeschneidplatte 1.

Vorzugsweise sind die einander drehsymmetrisch gegenüberliegenden Schneidecken 2 und 3, 4 und 5 sowie 7 und 8 durch je eine symmetrische Frontkante 21, 28 bzw. 31 bis 33 mit einem Frontkantenwinkel δ gegenüber der ersten Symmetrieachse A zwischen 0 und 30 Grad verbunden. Dabei ist zwischen der ersten Schneidecke 2 und der vierten Schneidecke 5 die Erstoberfläche vorhanden. Bei der Erstoberfläche handelt es sich um die eine flache Seite der Schneidplatte 1. Auf der anderen flachen Seite der Schneidplatte 1 ist eine Zweitoberfläche zu erkennen. Die Erstoberfläche und die Zweitoberfläche sind vorzugsweise planparallel zueinander ausgeführt. Dabei liegt entweder die Erstoberfläche oder die Zweitoberfläche in Arbeitslage in einem Werkzeughalter und ist die Schneidplatte 1 dabei im Zusammenspiel mit einer Auflagefläche am Werkzeughalter bevorzugt rechtwinklig zu einer Schneidebene fixiert. Je nach Anordnung des Werkzeughalters respektive des Schneidhalters über-Kopf, schräg oder horizontal liegen die Hauptschneiden 13 im Lot zu dem Schneidhalter. Dabei ist insbesondere wichtig, dass die Hauptschneiden 13, respektive Schneidwinkel, auf Höhe einer Mittellinie des rotierenden Werkstücks liegen sowie rechtwinklig zur Tangente am Berührungspunkt zu dem Werkstück, also senkrecht zum Vektor der Rotationsebene bzw. Schneidebene. Damit lassen sich mit einem geeigneten Schneidplattenhalter beliebige Schneidgeometrien an den Hauptschneiden und den zugehörigen Schneidecken realisieren. Meist wird der in den Zeichnungsfiguren dargestellte Frontkantenwinkel δ von 0 Grad für die Verbindungslinie der einander gegenüberliegenden Schneidecken 2 und 3 bzw. 4 und 5 gewählt und verläuft die Frontkante 21, 28 bzw. 31 bis 33 auch als Gerade.

Die Hauptschneiden 13.1 bis 13.6 gehen an den von den Schneidecken 2 bis 5, 7 und 8 entfernten Enden in Seitenkanten 6 über, die im Wesentlichen parallel zu der Ebene E verlaufen. Diese Seitenkanten 6 bilden im mittleren Bereich der 2-zähligen Wendeschneidplatte 1 eine Ecke mit stumpfem Winkel aus und verlaufen nach diesem Eckbereich zur anschliessenden Nebenschneide, beispielsweise für die Hauptschneide 13.1 zur Nebenschneide 14.2 oder für die Hauptschneide 13.4 zur Nebenschneide 14.4 (siehe Fig. 1). Die auf der selben Seite bezüglich der Symmetrieachse A befindlichen Ecken im Verlauf der Seitenkanten 6 sind durch symmetrisch verlaufende, vorzugsweise gerade, Einschubkanten 29, 30 miteinander verbunden. Die erste Hauptschneide 13.1 und die weiteren Hauptschneiden 13.2 bis 13.6 sind gemäss einer speziellen Ausführungsform der Erfindung wiederum in einem schrägen Winkel zu den Seitenkanten 6 derart expandierend angeordnet, dass die Einschubkanten 29, 30 eine kürzere Länge als die beiden Frontkanten 21, 28 aufweisen. Diese Ausführungsformen mit Zähligkeit n = 2 haben jeweils vier Hauptschneiden und vier Nebenschneiden und vier Schneidecken. Damit ergibt sich vorzugsweise in der Draufsicht parallel zur ersten Symmetrieachse A ein rautenförmiger Umriss der Wendeschneidplatte 1, bzw. ein Parallelogramm, wobei zwischen der ersten Frontkante 21 und der zweiten Frontkante 28 etwa mittig eine erste Einschubkante 29 und eine zweite Einschubkante 30 vorhanden sind.

Für die Ausführungsformen mit höherer Zähligkeit n der Rotationssymmetrie um die Achse A verlaufen die Seitenkanten in einer konkaven Form. Die Seitenkanten können dabei entweder abgerundet und auf die Symmetrieachse A hin gebogen verlaufen - wie in Fig. 9 bis 12 dargestellt ohne Knick in Form eines stetigen Bogens - oder auch an der der Achse A nächstliegenden Position eine auf die Symmetrieachse A hin weisende Ecke ausbilden. Für beispielsweise die Zähligkeit n = 3 mit jeweils sechs Hauptschneiden, sechs Nebenschneiden und sechs Schneidecken, die durch drei Frontkanten verbunden sind, nimmt der Umrisss der Wendeschneidplatte 1 aufgrund des auch hier spitzen Eckenwinkels ε die Form eines dreistrahligen Sterns an. Höhere Zähligkeiten n ergeben dann n-strahlige Sterne als Umriss der Wendeschneidplatte 1.

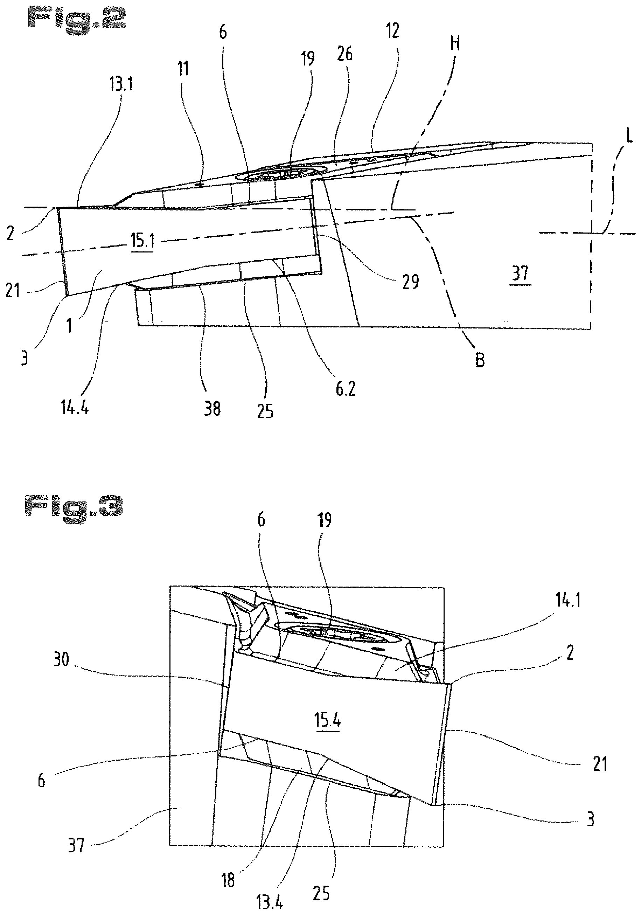

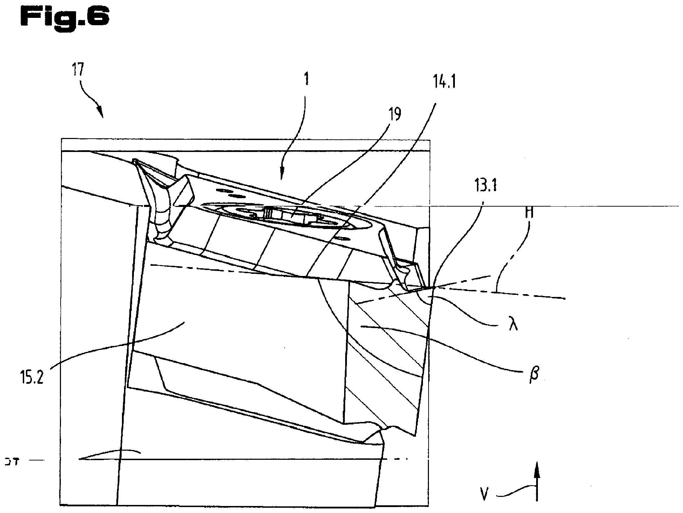

Die Hauptschneiden 13.1 bis 13.6 sind mit den spiegelsymmetrisch gegenüberliegenden Nebenschneiden 14.1 bis 14.6 jeweils durch eine Freifläche 15.1 bis 15.6 verbunden. Diese Freiflächen 15.1 bis 15.6 grenzen an die Hauptschneiden an und befinden sich in Bezug auf die Vorschubrichtung des Drehwerkzeuges 1, 17 auf dessen hinteren Seite. Einander benachbarte Freiflächen sind einerseits durch die Frontkanten 21, 28 und 31 bis 33 als auch durch die Einschubkanten 29 und 30 voneinander abgegrenzt. Im Falle der 3-zählig rotationssymmetrischen Wendeschneidplatte 1 mit den geschwungenen Übergängen zwischen den Freiflächen 15.1 bis 15.6 gehen diese über gekrümmte Flächen ineinander über. Weiter besteht ein optionales Merkmal darin, dass die Freiflächen 15.1 bis 15.6 zumindest in deren an die Hauptschneiden 13.1 bis 13.6 anschliessenden Randbereichen mit einer Ebene H, welche durch die einer bestimmten Schneidecke 2 bis 5, 7 und 8 anschliessenden Hauptschneide 13.1 bis 13.6 und Nebenschneide 14.1 bis 14.6 aufgespannt wird - und die in Fig. 2 und Fig. 6 strichliert angedeutet ist - einen Keilwinkel β zwischen 90 und 60 Grad ein.

Bevorzugt liegt der Keilwinkel β bei genau 90 Grad, wodurch sich parallel zur ersten Symmetrieachse A liegende Freiflächen 15.1 bis 15.6 ergeben. Zusammen mit den vorzugsweise geraden Frontkanten, die parallel zur Symmetrieachse A verlaufen, ergibt sich dann eine bevorzugte Ausführungsform für die Wendeschneidplatte, bei der nominell der Freiwinkel bei 0 Grad liegt. Aufgrund der völlig geraden Frontkanten sowie völlig ebenen Freiflächen sind derartige Wendeschneidplatten 1 besonders einfach und ohne aufwendige Nachbearbeitung durch einen Sinterprozess herstellbar. Dies Wendeschneidplatten 1 sind einfach entformbar und liegen gleich nach dem Entformen bereits in der gewünschten geometrischen Form vor, bedürfen daher keiner aufwendigen Nachbearbeitung.

Bei den Ausführungsformen der Fig. 1 bis 8 in 2-zählig rotationssymmetrischer Gestaltung gibt es beispielsweise auf der Oberseite der Wendeschneidplatte 1 zwei Ebenen H, eine definiert durch die Hauptschneide 13.1 und die Nebenschneide 14.1 an der Schneidecke 2, die andere definiert durch die Hauptschneide 13.2 und die Nebenschneide 14.2 an der Schneidecke 5. Auf der Unterseite lassen sich in gleicher Weise zwei Ebenen H an den Schneidecken 3 und 4 aufspannen. Für die 3-zählige, sternförmige Wendeschneidplatte 1 der Fig. 9 bis 12 lassen sich allein schon auf der z.B. in Fig. 9 sichtbaren Oberseite drei Ebenen H aufspannen. Die erste obere Ebene H wird definiert durch die Hauptschneide 13.1 und die Nebenschneide 14.1 an der Schneidecke 2, die zweite definiert durch die Hauptschneide 13.2 und die Nebenschneide 14.2 an der Schneidecke 5, und die dritte Ebene H wird definiert durch die Hauptschneide 13.3 und die Nebenschneide 14.3 an der Schneidecke 7. Auf der Unterseite lassen sich in gleicher Weise drei Ebenen H an den Schneidecken 3, 4 und 8 aufspannen. Der Ausdruck "innerer Winkel" soll zum Ausdruck bringen, dass es sich um den ins Innere der Wendeschneidplatte 1 weisenden Winkel handelt.

Wohl ist es möglich, dass die Freiflächen 15.1 bis 15.6 auch im Verlauf zwischen den einander spiegelsymmetrisch gegenüberliegenden Schneiden 13 und 14 konkav oder nach innen abgeknickt verlaufen. Vorteilhafterweise sind sie aber parallel zur ersten Symmetrieachse orientierte ebene Flächen.

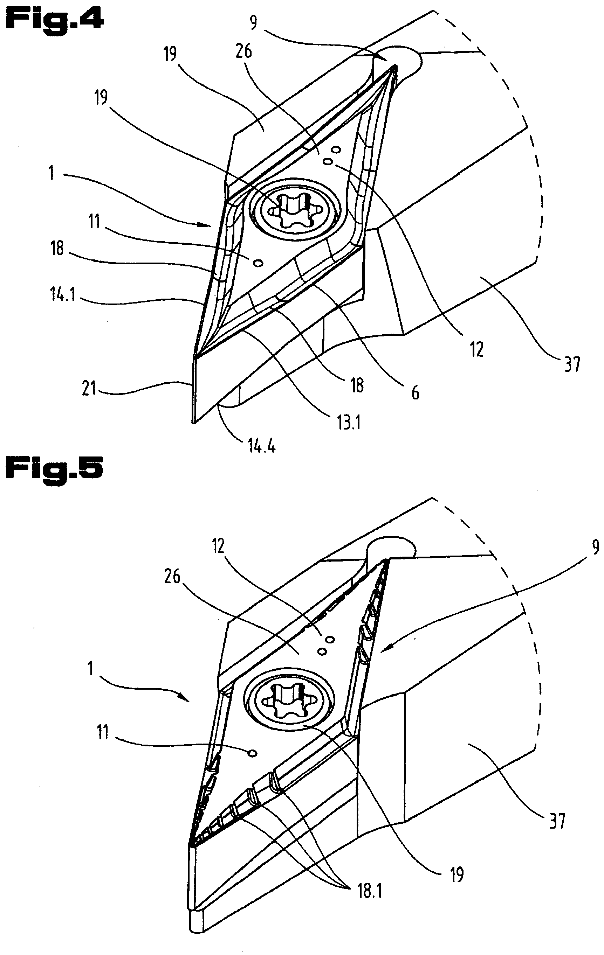

Bei allen Ausführungsformen der Wendeschneidplatte 1 ist es von Vorteil, wenn der sich an die Hauptschneiden 13.1 bis 13.6 anschliessende Randbereich der jeweiligen Spanfläche 25, 26 bei der 2-zähligen Ausführungsform der Fig. 1 bis 8 bzw. 40 bis 42 bei der 3-zähligen Ausführungsform der Fig. 9 bis 11 eine konkave Ausnehmung als Spanbrecher ausbildet, unter Ausbildung von inneren Keilwinkeln λ an den Hauptschneiden 13.1 bis 13.6 kleiner 90 Grad. Zusätzlich können weitere Oberflächenstrukturen im Bereich dieser Ausnehmungen oder an anderen Stellen der Spanflächen als zusätzliche Spanbrecher 18 (siehe die Fig. 5 und 8) angeordnet sein.

Bevorzugt ist zur einfachen Orientierung des Benutzers beim Rüsten mit einer neuen Hauptschneide jede einem bestimmten Hauptschneide-Nebenschneide-Paar zugehörige Spanfläche 25, 26 und 40 bis 42 auf der Oberseite, und den entsprechenden gegenüberliegenden Spanflächen auf der in den Zeichnungsfiguren nicht sichtbaren Unterseite der Wendeschneidplatte 1 mit einer Markierung 11, 12, 34, 35, 36 versehen, welche sich von allen anderen Markierungen anderer Spanflächen unterscheidet. Die 2-zählig rotationssymmetrische Ausführungsform der Fig. 1 bis 8 mit ihren vier Spanflächen sieht also vier unterschiedlichen Markierungen auf den Spanflächen vor, die 3-zählig rotationssymmetrische Variante der Fig. 9 bis 11 verwendet zur eindeutigen Kennzeichnung der sechs Spanflächen auch sechs individuelle Markierungen. Für die in den Fig. 1 bis 8 dargestellten Ausführungsformen ist auf der Erstoberfläche 26 zwischen der Durchgangsbefestigungsbohrung 16 und der ersten Schneidecke eine erste optische Markierung 11 und zwischen der Durchgangsbefestigungsbohrung 16 und der ersten Schneidecke 5 eine zweite optische Markierung 12 vorhanden. Weiter ist zwischen den jeweils zwei Hauptschneiden 13 jeder der Schneidecken 2, 3, 4, 5 jeweils ein Spanbrecher 18 angeordnet, wobei die Spanbrecher 18 eine kantige Oberflächenstruktur darstellen. Zwischen den beiden Frontkanten 21, 28 und den beiden Einschubkanten 29, 30 ist jeweils eine glatte Freifläche 15 vorhanden.

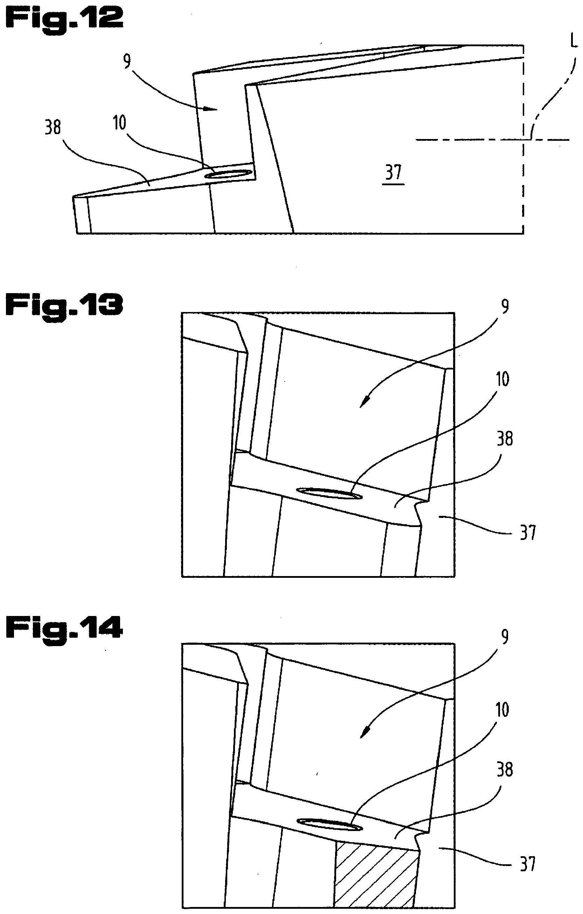

Für ihren Einsatz in einer Materialbearbeitungsmaschine ist die erläuterte Wendeschneidplatte 1 in einen Schneidplattenhalter 17 eingesetzt und bildet mit diesem zusammen das Drehwerkzeug. Eine beispielhafte Ausführungsform eines Schneidplattenhalters ist in den Fig. 2 bis 6 mit eingesetzter Schneidplatte 1 und in den Fig. 12 bis 14 ohne Schneidplatte 1 dargestellt. Der Schneidplattenhalter 17 dient zur Aufnahme und Fixierung der Wendeschneidplatte 1, welche mittels eines Befestigungsmittels 19, vorzugsweise einer Schraube, lösbar fixiert werden kann. Das aus beiden Bauteilen zusammengesetzte Werkzeug kann dabei rechtshändig, linkshändig, neutral oder mit beliebigem Winkel ausgeführt sein. Weiter ist in der Figur 2 ein erster Winkel gezeigt, welcher einen Winkel kleiner/gleich 90° der ersten Hauptschneide 13.1 zu der Frontkante 21 beschreibt. Der gleiche Winkel ist auch in den anderen Verbindungspunkten der weiteren Hauptschneiden 13.2 bis 13.6 zu den Frontkanten 21, 28 vorhanden.

In den Fig. 2 bis 6 ist weiterhin zu erkennen, wie eine Schneidhalterauflage 38 die Zweitoberfläche der Schneidplatte 1 haltend aufnimmt. Weiter ist zu erkennen, dass die Schneidplatte 1 in eine nicht näher beschriebene Aufnahmeöffnung des Grundkörpers 37 bis zur ersten Einschubkante 29 eingeschoben ist. Auf diese Weise hat der Nutzer eine einfache und schnelle Möglichkeit den korrekten Einsatz der Schneidplatte 1 in den Grundkörper 37 des Werkzeughalters zu kontrollieren. Die nicht näher beschriebene Aufnahme im Grundkörper 37 weist im Wesentlichen eine hälftige Negativform der Schneidplatte 1 auf. Dabei ist eine Schneidhalterebene vorhanden, die schräg zu einer Schneidhalterbasis verläuft. Da die Auflagefläche 38 für die Schneidplatte 1 im Grundkörper 37 des Werkzeugträgers ebenfalls schräg zu der Schneidhalterbasis angeordnet ist, ergibt sich eine Absenkung der eingebrachten Schneidplatte 1, wobei die Schräge der Auflagefläche 38 derart ist, dass die jeweils aus der Aufnahme zum Einsatz herausragende erste Hauptschneide 13.1 oder eine der weiteren Hauptschneiden 13.2 bis 13.6 zu einem Untergrund horizontal sind. Das heisst, dass die Hauptschneiden 13 beim Einbringen in und Befestigung mit dem Grundkörper 37 beim Einsatz einer Wasserwaage im Lot wären oder auch genau senkrecht darauf.

In der Figur 3 ist noch zusätzlich zu erkennen, wie der zweite Winkel dafür sorgt, dass die erste Frontkante 21 von der zweiten Schneidecke 2 zu der zweiten Schneidecke 3 zurückgesetzt ist. Diese Schräge ergibt sich dadurch, dass die Auflagefläche 38 schräg zu der Schneidhalterbasis angerordnet ist.

Der hier beispielhaft dargestellte und erläuterte Schneidplattenhalter 17 verfügt über einen länglichen Grundkörper 37 mit Polygon-Querschnitt, vorzugsweise mit rechteckigem Querschnitt. Anders geformte Grundkörper 37 sind möglich und sogar vielfach im Einsatz, beispielsweise mit zylindrisch zapfenförmigem Abschnitt zur Montage an der Werkzeugmaschine und einem im Wesentlichen beliebig gestaltbaren vorderen Ende, an welchem die Schneidplatte 1 befestigt wird. An diesem vorderen Ende, welches dem Werkstück zugewandt ist, weist der Grundkörper 37 eine Ausnehmung 9 zur Aufnahme der Wendeschneidplatte 1 sowie eine Struktur zur lösbaren Verbindung mit einem Befestigungsmittel 19 für die Wendeschneidplatte 1. In den Figuren 2 und 3 ist auch zu erkennen, wie in der Durchgangsbefestigungsbohrung 16 ein Befestigungsmittel 19 in Form einer Schraube vorhanden ist. Das Befestigungsmittel dient der Festlegung der Schneidplatte 1 in dem Grundkörper 37 des Werkzeughalters, wie er in den Figuren 2 und 3 ebenfalls zu erkennen ist. Die Ausnehmung 9 weist zumindest eine Auflagefläche 38 zur Abstützung der Wendeschneidplatte 1 in einer Richtung radial zur Längsachse L des Grundkörpers 37 auf. Bei Ausführung des Befestigungsmittels 19 bevorzugt als Schraube weist der Grundkörper 37 demnach eine Befestigungsbohrung 10 für diese Schraube auf. Besonders bevorzugt sind auch Seitenwände zur Abstützung der Wendeschneidplatte 1 parallel zur Längsachse L des Grundkörpers 37 und/oder in Umfangsrichtung vorgesehen.

Die Auflagefläche 38 liegt gemäss der vorliegenden Erfindung nicht parallel zur Längsachse L und senkrecht auf die Vorschubrichtung des Drehwerkzeuges 1, 17, sondern ist dagegen um zwei Achsen gekippt, wie gut in den Fig. 12 bis 14 zu erkennen ist. Einerseits ist die Auflagefläche 38 um die Längsachse L des Grundkörpers derart verdreht, dass die Dicke des Grundkörpers 37 an seiner Aussenseite, an welcher sich die jeweils aktive Hauptschneide 13.1 bis 13.6 befindet, geringer ist als im zentralen Bereich des Grundkörpers 37. Die zweite Achse der Verkippung der Auflagefläche 38 ist definiert durch die Schnittgerade zwischen der verdrehten Auflagefläche 38 und einer Ebene senkrecht auf die Längsachse L des Grundkörpers 17, d.h. einer Ebene senkrecht auf die Zeichenebene in Fig. 12 und parallel zur Zeichenebene in den Fig. 13 und 14. Je nach Lage der zweiten Ebene entlang der Längsachse L in Bezug auf die Auflagefläche 38 ergibt das eine steile oder flache Lage der Auflagefläche 38 in Bezug auf die Längsachse L. Die Verkippung um die zweite Achse erfolgt dabei derart, dass die geringste Dicke des Grundkörpers 37 zwischen Auflagefläche 38 und äusserer Begrenzung des Grundkörpers am äussersten Ende des Grundkörpers 37 vorliegt, wie diese besonders gut im Bereich des Querschnittes durch das vordere Ende des Schneidplattenträgers in Fig. 14 zu sehen ist. In Figur 3 ist zu erkennen, wie die erste Frontkante 21 von der ersten Schneidecke 2 zu der zweiten Schneidecke 3 zurücksetzend in Bezug auf die Mittelebene des Grundkörpers 37 schräg angeordnet ist. Dies ist durch einen zweiten Winkel kenntlich gemacht.

Weiter bildet die Schneidplatte 1 zwischen der ersten Schneidecke 2 und der Durchgangsbefestigungsbohrung 16 eine erste Funktionsseite aus und zwischen der vierten Schneidecke 5 und der Durchgangsbefestigungsbohrung 16 eine zweite Funktionsseite aus. In gleicher Weise ist auch zwischen der zweiten Schneidecke 3 und der Durchgangsbefestigungsbohrung eine vierte Funktionsseite ausgebildet und zwischen der dritten Schneidecke 4 und der Durchgangsbefestigungsbohrung 16 eine dritte Funktionsseite ausgebildet.

Durch diese Ausführungsform des Schneidplattenhalters 17 wird eine in die Ausnehmung 9 eingesetzte und mit ihrer Unterseite auf der Auflagefläche 38 abgestützte Wendeschneidplatte 1 auch entsprechend gekippt positioniert und dem Werkstück in dieser verkippten Orientierung zugestellt, was eine mit dieser Schneidplatte 1 sonst nicht mögliche Schneidgeometrie ermöglich. Mit einer Wendeschneidplatte 1 wie oben am Beispiel 2-zählig und 3-zählig rotationsymmetrischen Ausführungen lassen sich mit einer derartigen Schneidplattenhalter 17 - Wendeschneidplatten 1 - Anordnungen die gewünschten, vordefinierten Schneidgeometrien für alle vorhandenen Hauptschneiden 13.1 bis 13.6 in jeder Drehstellung und sowohl für die Oberseite als auch die Unterseite der Wendeschneidplatte 1 in gleicher, exakt reproduzierbarer Weise herstellen und somit eine lange Funktionsdauer einer einzelnen, meist aufwendig gefertigten Wendeschneidplatte 1 realisieren. Die damit erreichbaren geometrischen Verhältnisse entsprechen exakt jenen Verhältnissen, die mit herkömmlichen Anordnungen gegeben sind, jedoch mit dem Unterschied, dass die erfindungsgemässe Anordnung eine grössere Anzahl an Schneiden zur Verfügung stellt, für die dies zutrifft.

Wenn beispielsweise gemäss dem Standard DIN ISO 1832:2012 ein Freiwinkel von 7 Grad vorliegt, dann liegt dies nur für eine Seite der Schneidplatte vor. Mit einer erfindungsgemässen Schneidplatte mit einem nominellen Freiwinkel von 0 Grad kann durch Einsetzen in einen geeigneten Schneidplattenhalter mit gekippter Auflagefläche für die Schneidplatte der gewünschte Freiwinkel von real 7 Grad in allen möglichen Dreh- und Kippstellungen erzielt werden, so dass eine Schneidplatte viel länger genutzt werden kann. Die Maschine kann also viel länger ohne Austausch der Schneidplatte betrieben werden, was die Produktivität deutlich steigert.

Für jeden konkreten Schneidenwinkel γ, den die Hauptschneiden 13.1 bis 13.6 mit der orthogonal zur ersten Symmetrieachse A orientierten Ebene E, welche die zugehörigen Schneidecken beinhaltet, einschliesst, kann durch Wahl eines Schneidplattenhalters 17 mit geeignet verkippter Auflagefläche 38 eine Konfiguration erzielt werden, bei der vorteilhafterweise die jeweils aktive Hauptschneide 13.1 bis 13.6 einen gewünschten Winkel mit der Vorschubrichtung V des Drehwerkzeuges 1, 17 einschliesst, vorzugsweise orthogonal auf diese Vorschubrichtung V steht.

Wenngleich auch die Erfindung in der vorangehenden Beschreibung am Beispiel von plattenförmigen Schneideinsätzen erläutert wurde, ist die Anwendung auf andere Formen von Schneideinsätzen möglich, wobei allfällige Anpassungen im Rahmen des fachmännischen Könnens liegen.

### Bezugszeichenliste

- 1: Schneidplatte
- 2: Schneidecke
- 3: Schneidecke
- 4: Schneidecke
- 5: Schneidecke
- 6: Seitenkante
- 7: Schneidecke
- 8: Schneidecke
- 9: Ausnehmung
- 10: Befestigungsbohrung
- 11: Markierung
- 12: Markierung
- 13: Hauptschneiden
- 14: Nebenschneiden
- 15: Freiflächen
- 16: Befestigungsbohrung
- 17: .
- 18: Spanbrecher
- 19: Befestigungsmittel
- 20: .
- 21: Frontkante
- 22: .
- 23: .
- 24: .
- 25: Spanfläche
- 26: Spanfläche
- 27: .
- 28: Frontkante
- 29: Einschubkante
- 30: Einschubkante
- 31: Frontkante
- 32: Frontkante
- 33: Frontkante
- 34: Markierung
- 35: Markierung
- 36: Markierung
- 37: Grundkörper
- 38: Auflagefläche
- 39: .
- 40: Spanfläche
- 41: Spanfläche
- 42: Spanfläche
- A: Erste Symmetrieachse
- B: Zweite Symmetrieachse
- E: Ebene parallel zu Symmetrieebene mit Achse B
- H: Ebene der Hauptschneide und angrenzenden Nebenschneide
- L: Längsachse Grundkörper
- β.: Keilwinkel
- γ.: Schneidenwinkel
- δ.: Frontkantenwinkel
- ε.: Eckenwinkel
- λ.: Innerer Keilwinkel

## Patentansprüche

1. Wendeschneidplatte (1) für ein Drehwerkzeug für Materialbearbeitungsmaschinen, insbesondere Metallbearbeitungsmaschinen, mit einer ersten Symmetrieachse (A), wobei zumindest eine erste Gruppe von Hauptschneiden (13.1 bis 13.3) in Bezug auf die erste Symmetrieachse (A) n-zählig rotationssymmetrisch angeordnet sind, mit n vorzugsweise grösser oder gleich 2, wobei diese Hauptschneiden (13.1 bis 13.3) mit den jeweils angrenzenden ersten Nebenschneiden (14.1 bis 14.3) in jeweils einer Schneidecke einer ersten Gruppe von Schneidecken (2, 5, 7) unter einem Eckenwinkel (ε) von maximal 90 Grad zusammenlaufen, und mit zumindest einer die Wendeschneidplatte (1) parallel oder koaxial zur ersten Symmetrieachse (A) durchsetzenden Befestigungsöffnung (16), wobei die Wendeschneidplatte (1) um eine auf in ihrer Mittelebene liegende und zur ersten Symmetrieachse (A) orthogonale zweite Symmetrieachse (B) um 180 Grad drehsymmetrisch aufgebaut ist und dabei eine zweite Gruppe von Hauptschneiden (13.4 bis 13.6), Nebenschneiden (14.4 bis 14.6) und Schneidecken (3, 4, 8) aufweist, welche der erste Gruppe von Hauptschneiden (13.1 bis 13.3), Nebenschneiden (14.1 bis 14.3) und Schneidecken (2, 5, 7) um die zweite Symmetrieachse (B) drehsymmetrisch gegenüberliegt, **dadurch gekennzeichnet, dass** zumindest die Hauptschneiden (13.1 bis 13.6) mit einer orthogonal zur ersten Symmetrieachse (A) orientierten Ebene (E), welche die zugehörigen Schneidecken beinhaltet, einen spitzen Schneidenwinkel (γ) einschliessen, vorzugsweise einen Winkel (γ) zwischen 0.1 und 70 Grad.

2. Wendeschneidplatte nach Anspruch 1, **dadurch gekennzeichnet, dass** die einander drehsymmetrisch gegenüberliegenden Schneidecken (2 und 3, 4 und 5 bzw. 7 und 8) durch je eine symmetrisch verlaufende Frontkante (21, 28 bzw. 31, 32, 33) mit einem Frontkantenwinkel (δ) gegenüber der ersten Symmetrieachse (A) zwischen 0 und 30 Grad verbunden sind, vorzugsweise durch eine gerade Frontkante mit 0 Grad.

3. Wendeschneidplatte nach Anspruch 1 oder 2, **dadurch gekennzeichnet, dass** die Hauptschneiden (13.1 bis 13.6) in jeweils eine anschliessende Seitenkante (6) übergehen, welche Seitenkanten (6) parallel zur Ebene (E) verlaufen und über eine Ecke mit stumpfem Winkel oder ein bogenförmiges Verbindungsstück zur anschliessenden Nebenschneide (14.1 bis 14.6) verlaufen.

4. Wendeschneidplatte nach einem der Ansprüche 1 bis 3, **dadurch gekennzeichnet, dass** zumindest die Hauptschneiden (13.1 bis 13.6) mit den spiegelsymmetrisch gegenüberliegenden Nebenschneiden (14.1 bis 14.6) durch jeweils eine Freifläche (15.1 bis 15.6) verbunden sind, die zumindest in den an die Hauptschneiden anschliessenden Randbereichen mit einer Ebene (H), welche durch die einer bestimmten Schneidecke (2 bis 5, 7 und 8) anschliessenden Hauptschneide (13.1 bis 13.6) und Nebenschneide (14.1 bis 14.6) aufgespannt wird, einen inneren Winkel (δ) zwischen 90 und 60 Grad, vorzugsweise genau 90 Grad, einschliesst.

5. Wendeschneidplatte nach einem der Ansprüche 1 bis 4, **dadurch gekennzeichnet, dass** die einander um die zweite Symmetrieachse (B) drehsymmetrisch gegenüberliegenden Gruppen von Hauptschneiden (13.1 bis 13.6), Nebenschneiden (14.1 bis 14.6), Schneidecken (2 bis 5, 7, 8), Ecken und bogenförmige Abschnitte durch parallel zur ersten Symmetrieachse (A) orientierte Kanten (29, 30) bzw. Flächen (15.1 bis 15.6) miteinander verbunden sind.

6. Wendeschneidplatte nach einem der Ansprüche 1 bis 5, **dadurch gekennzeichnet, dass** die Zähligkeit n gleich 2 oder 3 ist und somit jeweils 4 oder 6 Hauptschneiden (13.1 bis 13.6), Nebenschneiden (14.1 bis 14.6) und Schneidecken (2 bis 5, 7, 8) vorhanden sind, wobei vorzugsweise die Wendeschneidplatte (1) in der Draufsicht parallel zur ersten Symmetrieachse (A) einen rautenförmigen oder als dreistrahliger Stern vorliegenden Umriss zeigt.

7. Wendeschneidplatte nach einem der Ansprüche 1 bis 6, **dadurch gekennzeichnet, dass** der sich an die Hauptschneiden (13.1 bis 13.6) anschliessende Randbereich der Spanfläche (25, 26 bzw. 40 bis 41) eine konkave Ausnehmung ausbildet, unter Ausbildung von inneren Keilwinkeln (λ) kleiner 90 Grad, vorzugsweise anschliessend daran zumindest ein Spanbrecher (18) ausgebildet ist.

8. Wendeschneidplatte nach einem der Ansprüche 1 bis 7, **dadurch gekennzeichnet, dass** jede einem bestimmten Hauptschneide-Nebenschneide-Paar (z.B. 13.1 und 14.1) zugehörige Spanfläche (25, 26 bzw. 40 bis 41) mit einer Markierung (11, 12 bzw. 34 bis 36) versehen ist, welche sich von allen anderen Markierungen anderer Spanflächen unterscheidet.

9. Schneidplattenhalter (17) für ein Drehwerkzeug für Materialbearbeitungsmaschinen, insbesondere Metallbearbeitungsmaschinen, zur Aufnahme und Fixierung einer Wendeschneidplatte (1), insbesondere einer Wendeschneidplatte gemäss einem der Ansprüche 1 bis 8, mit einem länglichen Grundkörper (37) mit Polygon-Querschnitt, vorzugsweise mit rechteckigem Querschnitt, und einer Ausnehmung (9) zur Aufnahme der Wendeschneidplatte (1) sowie einer Struktur zur lösbaren Verbindung mit einem Befestigungsmittel (19) für die Wendeschneidplatte (1), wobei die Ausnehmung (9) zumindest eine Auflagefläche (38) zur Abstützung der Wendeschneidplatte (1) in einer Richtung radial zur Längsachse (L) des Grundkörpers (37) aufweist, vorzugsweise auch Seitenwände zur Abstützung der Wendeschneidplatte (1) parallel zur Längsachse (L) des Grundkörpers (37) und/oder in Umfangsrichtung,
**dadurch gekennzeichnet, dass**
die Auflagefläche (38) um die Längsachse (L) des Grundkörpers (37) verdreht und um eine zweite Achse, die eine Schnittgerade zwischen der verdrehten Auflagefläche (38) und einer Ebene senkrecht auf die Längsachse (L) des Grundkörpers (38) ist, gekippt ist, wobei die geringste Dicke des Grundkörpers (37) unterhalb der Auflagefläche (38) am äussersten Ende des Grundkörpers (37) vorliegt.

10. Schneidplattenhalter (17) nach Anspruch 9, **dadurch gekennzeichnet, dass** die Auflagefläche (28) in jeder Ebene orthogonal auf die Längsachse (L) des Grundkörpers (37) mit einer Ebene senkrecht auf die Arbeitsebene des Werkzeuges einen spitzen Winkel einschliesst, der dem gewünschten Freiwinkel entspricht.

11. Schneidplattenhalter (17) nach Anspruch 9 oder 10, **dadurch gekennzeichnet, dass** die Auflagefläche (38) in jeder Ebene parallel zur Arbeitsebene des Werkzeuges mit einer Ebene parallel zur Längsachse (L) des Grundkörpers (37) und quer zur Arbeitsebene des Werkzeuges einen spitzen Winkel einschliesst, der dem Schneidenwinkel (γ) der parallel zur Längsmittelebene der einzusetzenden Wendeschneidplatte (1) verlaufenden Ebene (E) und deren Hauptschneiden (13.1 bis 13.6) entspricht.

12. Schneidplattenhalter nach Anspruch 10 oder 11, **dadurch gekennzeichnet, dass** die Auflagefläche (38) in jeder Ebene parallel zur Längsachse (L) des Grundkörpers (37) und zur Arbeitsebene des Werkzeuges mit einer Ebene parallel zur Längsachse (L) des Grundkörpers (37) und quer zur Arbeitsebene des Werkzeuges einen spitzen Winkel einschliesst, der dem Winkel zwischen der Längsmittelebene der einzusetzenden Wendeschneidplatte (1) und deren Hauptschneiden (13.1 bis 13.6) plus oder minus einem gewünschten Werkzeug-Einstellwinkel entspricht.

13. Schneidvorrichtung, insbesondere Drehwerkzeug für Materialbearbeitungsmaschinen, insbesondere Metallbearbeitungsmaschinen, umfassend eine Wendeschneidplatte (1), einen stabförmigen Schneidplattenhalter (17) mit einer Ausnehmung (9) an einem seiner Enden zur Aufnahme der Wendeschneidplatte (1), sowie Befestigungsmitteln (19) zur lösbaren Fixierung der Wendeschneidplatte (1) in der Aufnahme (9) des Schneidplattenhalters (17), **gekennzeichnet durch** eine Wendeschneidplatte (1) gemäss einem der Ansprüche 1 bis 8 und einen Schneidplattenhalter (17) gemäss einem der Ansprüche 9 bis 12.

14. Schneidvorrichtung mit einer Schneidplatte (1) zur Aufnahme in einem Grundkörper (37) eines Werkzeughalters, umfassend eine erste Frontkante (21) und eine zweite Frontkante (28), wobei die erste Frontkante (21) jeweils endseitig eine erste Schneidecke (2) und eine zweite Schneidecke (3) ausbildet und die zweite Frontkante (28) jeweils endseitig eine dritte Schneidecke (4) und eine vierte Schneidecke (5) ausbildet, wobei zwischen der ersten Schneidecke (2) und der vierten Schneidecke (5) eine Erstoberfläche vorhanden ist, wobei in die Erstoberfläche und in eine Zweitoberfläche jeweils eine Durchgangsbefestigungsbohrung (16) eingeformt ist, **dadurch gekennzeichnet, dass** die Erstoberfläche und die Zweitoberfläche planparallel zueinander ausgeführt sind, wobei von jeder der Schneidecken (2, 3, 4, 5) jeweils zwei Hauptschneiden (13) jeweils bis zu einem Abschnittübergang verlaufen und anschliessend in eine Seitenkante (6) übergehen, wobei die Seitenkanten (6) bis hin zu einer ersten Einschubkante (29) oder zu einer zweiten Einschubkante (30) verlaufen, wobei von den Hauptschneiden (13) jeweils zu den beiden Frontkanten (21, 28) ein erster Winkel vorhanden ist, wobei der Grundkörper (37) eine Aufnahme mit einer Auflagefläche (38) für die Schneidplatte (1) aufweist, wobei die Auflagefläche (38) derart schräg zu einem Untergrund angeordnet ist, wobei der erste Winkel derart abgefangen ist, sodass die Hauptschneiden (13) horizontal oder parallel zu einem Untergrund anordenbar sind.

15. Schneidvorrichtung nach Anspruch 14, **dadurch gekennzeichnet, dass** die erste Frontkante (21) von der ersten Schneidecke (2) zu der zweiten Schneidecke (3) in einem zweiten Winkel schräg angeordnet ist, und/oder dass die zweite Frontkante (28) von der vierten Schneidecke (5) zu der dritten Schneidecke (4) in einem weiteren Winkel schräg angeordnet ist.

16. Schneidvorrichtung nach Anspruch 14 oder 15, **dadurch gekennzeichnet, dass** in die Durchgangsbefestigungsbohrung (16) der Erstoberfläche oder der Zweitoberfläche ein Befestigungsmittel (19) zur Festlegung der Schneidplatte (1) in dem Grundkörper (37) einbringbar ist.

17. Schneidvorrichtung nach einem der vorigen Ansprüche, **dadurch gekennzeichnet, dass** zwischen der ersten Schneidecke (2) und einerseits der Durchgangsbefestigungsbohrung (16) eine erste Funktionsseite ausgebildet ist und zwischen der vierten Schneidecke (5) und andererseits der Durchgangsbefestigungsbohrung (16) eine zweite Funktionsseite ausgebildet ist, und/oder dass zwischen der zweiten Schneidecke (3) und einerseits der Durchgangsbefestigungsbohrung (16) eine vierte Funktionsseite ausgebildet ist und zwischen der dritten Schneidecke (4) und andererseits der
Durchgangsbefestigungsbohrung (16) eine dritte Funktionsseite ausgebildet ist.

18. Schneidvorrichtung nach einem der Ansprüche 14 bis 17, **dadurch gekennzeichnet, dass** zwischen den jeweils zwei Schneiden jeder der Schneidecken (2, 3, 4, 5) jeweils ein Spanbrecher (18) angeordnet ist.

19. Schneidvorrichtung nach einem der Ansprüche 14 bis 18, **dadurch gekennzeichnet, dass** zwischen den beiden Frontkanten (21, 28) und den beiden Einschubkanten (29, 30) jeweils eine glatte Freifläche (15) vorhanden ist.
